Europäisches Patentamt

(19) European Patent Office

Office européen des brevets

(11) Publication number: **0 020 310**
**B1**

(12) **EUROPEAN PATENT SPECIFICATION**

(45) Date of publication of patent specification: **01.06.83**

(51) Int. Cl.³: **H 02 J 13/00, H 02 J 3/14**

(21) Application number: **80830030.5**

(22) Date of filing: **23.05.80**

(54) **A remote control direct electric load management system.**

(30) Priority: **28.05.79 IT 4919279**
**14.06.79 IT 4940779**

(43) Date of publication of application:
**10.12.80 Bulletin 80/25**

(45) Publication of the grant of the patent:
**01.06.83 Bulletin 83/22**

(84) Designated Contracting States:
**AT BE CH DE FR LI LU NL SE**

(56) References cited:
**DE - A - 2 404 234**
**DE - A - 2 556 927**
**DE - A - 2 710 698**
**FR - A - 2 394 910**
**US - A - 2 654 805**
**US - A - 3 894 244**
**US - A - 3 942 168**
**US - A - 3 942 170**
**US - A - 4 152 605**

(73) Proprietor: **Spena, Arnaldo**
**Via Città di Cascia, 31**
**I-00191 Roma (IT)**

(72) Inventor: **Spena, Arnaldo**
**Via Città di Cascia, 31**
**I-00191 Roma (IT)**

Courier Press, Leamington Spa, England.

A remote control direct electric load management system

The present invention relates to a remote control system for the limitation of the power which users can load on to an electric network.

It is well known that the electric energy production and delivery systems are negatively affected by peak loads which substantially reduce their overall energy efficiency thus lowering the system utilization factor.

It is also well known that the yearly curve of produced power, as referred to the average values, has a particular shape composed, mostly, of waves that can be characterized by amplitude and frequency and, to a lesser extent, by other components of a casual type, which can not be systematically determined.

It is also known that the corresponding daily, weekly, monthly and seasonal curves have different shapes according to the particular activities involved: working, commercial, services, recreation, etc.

In addition, since electric power cannot be stored as it is, there are different ways of and difficulties in satisfying the variations in power demand, which may be related to long periods (e.g. one month), or to short periods (e.g. one day).

In the first case, the long term variations in power demand can be easily satisfied by operating or stopping one or more power plants; the supply of power is thus easily regulated and usually nothing more can be or is demanded by the consumers.

In the second case, the short term variations in power demand actually present greater difficulties, and certainly there are not rigorous and efficient methods for regulation of both the supply and the demand of power.

At present, energy supply is controlled, even if in a discontinuous and in a chance way, by disconnecting, when it is strictly necessary and the capability of the peak power stations is not sufficient, some zones of users. This way of proceeding is, however, seldom possible, usually due to the presence of users engaged in essential and/or public utility services; consequently this way of proceeding is adopted, rather, to prevent the extension of a black-out.

Rather than directly controlling the demand for power, the demand is instead modified by suitable incentives or disincentives, such as lower rates in the hours of lower load (i.e. in the night hours) and/or overcharged rates for the load peaks.

However the reduction of the load peaks and the shifting of the power to be loaded on the network to periods of greater availability, whenever possible, is entrusted to the evaluation made by the individual customers of the practical disadvantage deriving from such operations versus the savings that can be thus realized, and, usually, the disadvantages prove to be greater than the advantages related to lower rates offered for the industrial, the commercial and the residential users.

In some cases, differential rate causes waste of energy, for the community, due to the shifting to the use of electricity instead of the use of fuel, by customers.

It is also known that, at present, in an electric network the remote control signals for the reduction of the loads are usually inserted at the level of voltage, said level being higher than that with which the user is supplied.

This implies the solution, which varies according to different cases, of remarkable technical problems, in addition to the need for the use of a remote control device requiring a high level of power and voltage to prevent the signals' attenuation, particularly when the signals are passing from one level of voltage to the following one, through transformers and phase-shifting transformers. The limitations concerning the frequencies to be used for these signals are also known, as well as the consequent technical difficulties for enlarging the networks and of the growth of the number of users.

Besides, the methods presently used are usually able to codify signals of the "pulse-interval" kind.

Finally, the existing load management systems have proven to be expensive, complicated and specially oriented just to switch out determined and prefixed specific loads.

Examples of such systems may be found in US—A—4152605. As already said such systems provide, in order to reduce load, the switching off of determined and prefixed loads of the users, irrespective of the power actually drawn by users.

Thus no control is performed at user level, in a control system the feed-back concept being inherent, but rather commands are issued to the users and the users are affected by such commands or unaffected depending only on the circumstance if they are effectively using the equipments being disconnected.

The purpose of the present invention is to program and provide a direct load management with the reduction of peak loads, said reduction being controlled by the Utility, leaving the individual user free to reset his load in the following time of greater power available.

Another important purpose is the prevention of black-outs due to overloads, with respect to the effective supplying capability of the network, lowering the supplied power to a safe level, by imposing to the users a reduction of the power they draw from the network down to a variable level expressed as a percentage of the maximum contractual power allotted to each of them.

This has the advantage of requesting to each of the users a some how proportionate contribution in the load reduction program without penalizing a user more than another one and leaving users free to establish their own load disconnection priority criteria.

Another purpose, even if an optional one, of the present invention, is to modify the rate of the meters during the limited power supply periods, to give users a discount on a fraction of power used, corresponding to a prefixed rate discount.

An additional purpose of the present invention is to introduce the remote control signals directly at the level of the voltage of the users, and thereby to modulate the signal so that it can reach the individual user by means of the power line carrier system.

Another purpose of the present invention is that of facilitating the use of analog and digital signals.

Finally, this invention has the purpose of operating with signals and equipment having a low power absorption, high reliability and low attenuation.

Other purposes and advantages will be apparent from the following description and from the enclosed drawing, showing, for exemplification purposes, an embodiment of the present invention.

The set of devices needed to reduce, in the hours when it is deemed necessary, the maximum power available to every individual user, as a percentage of the maximum value stated in the contract with the Utility, consists of an electronic device installed by each individual user, whereby said device:

1) is able to detect, through a proper signal, the instanteneous power load of the user;
2) is able to detect and decode a signal transmitted by the Utility, and compare the same with the foregoing signal, and, under certain conditions, partially or totally to switch off the user's load, at the same time activating the optional module for rate reduction, and/or other possible modules.

Resuming, the basic concept of the equipment is the following: when the Utility considers it convenient, in the interest of service and therefore in the interest of the community, to reduce the load on the network, it can transmit from a dispatching office to the above devices a reduction signal having an intensity proportional to the percentage of the expected reduction. This latter signal then produces at the local level, for those users which at the time are absorbing an amount of power higher (with respect to the contract values) then the value related to the transmitted signal, a partial disconnection of the load, thus causing the desired load reduction on the network for the planned period.

This operation lowers the load peaks, and the advantages that can be obtained are all those of social and economical order due to a lower cost of power, through better planning of energy resources, and investments, and through the prevention of black-outs.

Tests with prototypes highlighted the effectiveness and the advantages of the present invention.

The present invention, in a preferred embodiment, is shown in schematic form in the enclosed drawing, in which:

Figure 1 depicits an electric network, in a single-wire representation;

Figure 2 depicts a signal generator GS;

Figure 3 depicts a relaying device RT;

Figure 4 depicts a receiver R.

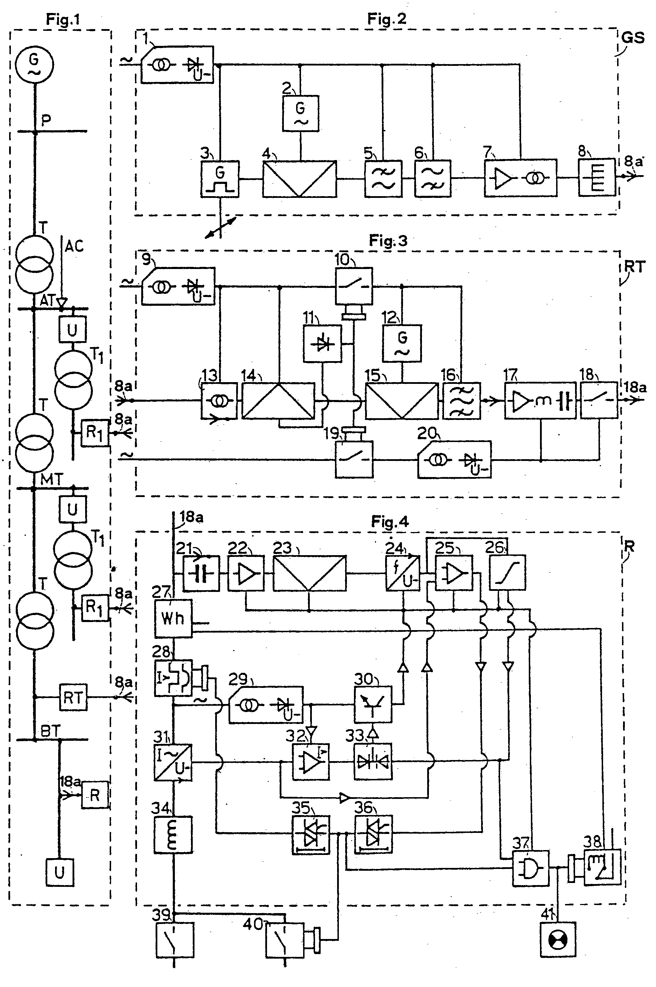

The components of figures 1 to 4 are connected with each other in the way and for the functions which will be hereafter disclosed.

Figure 1 shows a production line P from a power plant G and an external supplier vector AC, followed by a high voltage line AT; a medium voltage line MT and finally a low voltage line BT. Lines AT, MT and BT are interconnected through substations and step down transformers T.

Also the users U are indicated, for the low, the medium and the high voltages, the last two having usually their own substations and step down transformers T1.

Here also the positions of the relaying device RT and of the receivers R in the low voltage line are indicated.

In the medium voltage line MT and high voltage line AT appear the modified receivers R1, which will be discussed later.

Figure 2 shows the block diagram of the signal generator GS (settled in a dispatching office), consisting of:

— a regulated power supply 1 (e.g. 220V AC/12V DC, 500 mA);
— a fixed frequency oscillator 2 working in the audio band (e.g. 2900 Hz);
— a pilot generator 3, producing the desired frequency signal (e.g. between 30 and 100 Hz square wave);
— a modulator 4, which modulates the fixed frequency with the frequency of the pilot generator (e.g. in frequency modulation with a ±5% deviation);
— a system of low-pass filter 5 and high-pass filter 6, limiting the frequency band of the resulting signal (e.g. an active filter having a cut-off frequency, respectively, of 3400 Hz and 2400 Hz, so as to leave available, in a telephone channel, the 300 Hz to 2400 Hz band for other possible uses);
— an output stage 7 which regulates the output impedance in such a way as to allow the simultaneous link-up to several telephone lines 8. The output signal is then sent, through a line 8a of the telephone type, to the RT relaying devices.

It must be borne in mind that the pilot generator 3, that establishes the signal to be sent, is manually operated (or also, possibly, automatically) to obtain a particular reduction of the loads on the power network at the desired times and for the desired durations (e.g. 30 Hz signal corresponds to a 0% reduction, while 100 Hz signal corresponds to an 80% reduction of the allowable power drawing, an amount equal to 20% being the minimum guaranteed for essential and undelayable needs). It must further be borne in mind that the area controlled by a signal generator GS can be geographically extended, as the telephone network assures the quality of the transmitted signals.

Figure 3 shows the block diagram of the relaying device RT (settled in substation or in step down transformer unit), which is composed of:

— a regulated power supply 9 (e.g. 220V AC/8V DC, 10 mA in stand-by and 100 mA when the entire circuit is operating);
— an input circuit with telephone transformer 13 which delivers the signal from the generator GS to demodulator 14;
— the demodulator 14 which demodulates the received signal and controls the starting-up of the whole relaying device RT (e.g. a synchronous demodulator based on a "tone decoder/phase locked loop" integrated circuit, which will supply the frequency demodulated signal along with an on-off signal according to the presence—or respectively the absence—of a carrier);
— a controller 11 of relays 10 and 19 (e.g. a medium power transistor, controlled by the carrier of the demodulator 14);
— the relay 10, which gives power to the second part of the circuit;
— a fixed frequency oscillator 12, generating a carrier frequency (e.g. a 140 kHz sine wave);
— a modulator 15, which modulates the carrier frequency of oscillator 12 (e.g. amplitude modulation by interruption of the carrier) with the signal received from the demodulator 14 (e.g. 30 to 100 Hz square wave), and supplies a low-power signal;
— a narrow-band-pass filter 16;
— a power amplifier and a coupling filter 17;
— a set of relays 18 to introduce the signal in the power network via 18a;
— a second stabilized power supply 20 switched on by relay 19 (e.g. 220V AC/18V DC, 5A);
— the relay 19 to control the power supply 20.

Figure 4 shows the layout of the receiver R (settled in the user stations), consisting of:

— a meter 27 installed by the Utility;
— a current limiting switch 28 which functions as power limiter, of the same kind as that installed by the Utility, but with a releasing coil (e.g. 200V AC, 100 VA);
— a possible blocking inductance 34 tuned to the carrier frequency, if the blocking inductances of the current coil of the meter 27 and those of the current limiting switch 28 and of the current-to-voltage converter 31 are insufficient;
— a stabilized power supply 29 (e.g. 220V AC/8V DC, 10 mA in stand-by and 100 mA when the receiver is in full operation);
— the current-to-voltage converter 31 with very low losses, which supplies the comparators 32 and 25 a signal which varies in direct proportion to the user load current (converter 31 might be, e.g., a set of miniature transformers, with a silicon-steel core and trimmed air gap, whose primary windings are composed of one or two turns with a suitable section wire, connected in series on each phase of the incoming power line, and whose secondaries, made of several thousands turns, are connected to a rectifying-levelling circuit whose output voltage is determined by the most loaded phase);
— the comparator 32 which, over a given threshold (for instance a threshold corresponding to a mimimum guaranteed power), will supply a signal to pilot a circuit 33 for the intervention of an electronic switch 30;
— the electronic switch 30 to feed the entire remaining circuit (e.g. a medium power transistor);
— the trigger circuit 33 which controls the electronic switch 30 and which is excited by the differential comparator 32 and is possibly kept on by the signal emitted by the device 26, when the signal is on;
— an input circuit 21 with high galvanic insulation, to pick up the signal from the power line 18a (e.g. through a capacitive coupling);
— an amplifier 22;
— a demodulator 23 (e.g. a synchronous receiver based on the mentioned "tone decoder/phase locked loop", and from which on-off signal will be picked up, so as to fully utilize the characteristics of high out of band signals and noise rejection, obtaining the 30 to 100 Hz square wave signal at the output);
— a frequency-to-voltage converter 24 which delivers an output voltage, which varies proportionally to the input frequency;
— a comparator 25 which compares the output of the frequency-to-voltage converter 24 with that of the current-to-voltage converter 31 and delivers, when the former voltage is greater than the second one, a control signal to relays 35 and 36;
— a threshold device 26 which, in the presence of an output signal coming from the frequency-to-voltage converter 24, even if this signal is not sufficiently high to be operative for the comparator 25, will supply and maintain a controlling voltage to the trigger circuit 33 and to the optional rate reducer 37;
— a solid state delayed relay 35 (having, e.g., a delay of 3 seconds) which controls the coil of current limiting switch 28;
— an optional solid state delayed relay 36 (having, e.g., a delay of 2 seconds) controlling the coil of a remote control switch 40 that the user can install for delayable loads: relays 36 can used in any desired number for gradual delays, depending on the demand of the users;
— one or more possible remote control switches 40 of the user;
— a possible user's switch 39 for essential undelayable loads;
— an optional control for rate reductions 37 which, when excited by the same pulse activating the switch 40 and kept alive by the threshold device 26, will activate the relay 38;
— a relay 38 for inserting a calibrated impedance in series with the voltage coil of the meter 27;
— a warning light 41, informing the user that the system is in operation and that a rate reduction is being applied.

In the cases of the users connected to the high voltage line AT and medium voltage line MT, which have their own transformer units, the receivers R, modified to receivers R1, must be mounted directly after the transformers, as shown in Figure 1.

There are no relaying devices RT.

The signal generators GS send their signals directly to the receivers R1 which have been modified in the following way:

the blocks 21, 22 and 23, which are respectively receiver, amplifier and demodulator for carried waves, are replaced by the blocks 13 and 14, which are respectively receiver and demodulator for telephone signals. Therefore, the solid state relays 35 and 36, and other possible ones, will drive suitable power remote control switches, and the current-to-voltage converter 31 may be connected to the network through convenient measurement transformers, the same as could be done with the meter 27.

Resuming, the system remains basically the same, with the difference that measurements, signals and operations are made through conventional measurement transformers and remote power control switches.

The system, which also remains the same in concept from the inventive standpoint, will improve the industrial characteristics thereof because of the fact that, by eliminating the power line carrier system, the same practically eliminates any complication, although solved, due to the signal-to-noise ratio, and improves the technical-economical performances thereof, as said system can be applied to the more privileged users, particularly to the medium voltage users (the high voltage users being generally self-producers and/or users with particular contracts regarding the interruption of the supply) that represent only a small percentage of all users, although those medium voltage users contribute to a large part of the load on the electric network.

The operation of the system will be briefly described hereinbelow.

For clarity's sake, the internal working of the signal generator GS and of the relaying device RT, and also some details of receivers R, R1 themselves will be overlooked, also because the same were already sufficiently described in the preceding general illustration of the block diagrams.

As set forth above the signal generator 3 can be operated manually or automatically.

In either event the operation depends on the analysis of the existing difference, instant by instant, on the network between the power requested by the users and the power available in the network, and also on the rate of growth of this difference and on the dynamic level of risk that the Utility wants to assume. In short, it depends on all those parameters presently available to an "area dispatcher" through the reading of instruments and messages.

At present, the dispatcher operates at a "supply management" level, and only if the probability of a black-out is great and is quickly increasing, the dispatcher disconnects lower priority areas, but does not affect any operation of "direct load management".

The proposed system foresees, instead, the reduction of the loads on the network through the operation, on an appropriate scale, of signal generator GS. The "reduction signal", issued by signal generator GS, will reach, with the particular value that it has at any instant, the comparators 25 of the receivers installed in the premises of the users.

On the other hand, each comparator 25 receives also a "load signal" coming from the current-to-voltage converter 31, and which represents the electric power drawn by the user in the form of a percentage of its contract for the supply, inclusive of a minimal fraction, determined by the comparator 32, related with the essential, undelayable needs.

These two signals are expressed by negligible current reference voltages which assume the zero value for a zero load, and maximum reduction, and, respectively, unitary value for the maximum (available by contract) load and zero reduction.

As long as the "reduction voltage" is greater than the "load voltage" the system is non-operating. Otherwise, as soon as the "reduction voltage" goes lower than the "load voltage", or, obviously, the "load voltage" rises above the "reduction voltage", a signal will be given by the comparator 25. This signal will energize first the relay 36, properly delayed to avoid the intervention thereof in cases of momentary overloading by the user's equipment.

The relay 36 will energize the remote control switch 40 which will turn off the associated fraction of load, which has been selected by the user, and if the residual load no longer causes the condition "reduction voltage" less than "load voltage", the same will switch off any other intervention, i.e. it will prevent the control station reducing the user's load further.

On the contrary, and after the prescribed time for the greater delay of the relay 35 has elapsed, this relay will energize the limiter 28, thus disconnecting the user's equipment. The resetting of the voltage can be done by the user by resetting the remote control switches, after a proper reduction of the load. The total load can be connected again as soon as the power reduction is no longer operating, a condition that can be signalled to the user by a warning light 41 off.

Rate reducer 37, which is optional, can operate in two different modes: the first one is to operate only after the first operation of the relay 36 (that is, from the moment in which the signal sent by the Utility has caused a reduction of the power used by that user), and the second mode is to operate in any case with the presence of the signal through the device 26. Both modes will end as soon as the Utility stops the power reduction.

A preferred embodiment of the invention is set forth by the indications given, for exemplifying purposes, in the text (generally with "e.g." abbreviation).

It must be kept in mind that some of the blocks and some of the components of the invention are either optional or can be replaced with similar blocks and components having analogous functions, anyhow combined or arranged. This depends on the specific lay-out of the distribution network, on the production and design structure of the firm charged with the serial production of the devices, and on the market-availability of the components at the time of the production.

As an example, the distribution signal could be a binary signal, coded by modulating the transmission with a sequence of bits having a fixed length. In this case it would be necessary to decode it by means of a serial-parallel converter, at the output of which would be found the value of the binary number, represented digit by digit (e.g. with four bits the values from zero to 15 can be shown). Through a further decoding, this number can serve one of several outputs or, through a digital-to-analog converter, the number can generate different reference voltages.

## Claims

1. A remote control direct electric load management system for limiting the amount of power available at each of a plurality of remote user stations (U) the system being of the type comprising a dispatching office provided with first signal generating means (GS), for generating and applying if required, via signal relaying means (RT), to the power network for reception by each remote user station (U) a first signal causing a load reduction, and receiving means (R, R1) at user stations (U) responsive to said first signal for disconnecting using first switching means, at least some of the load in said user station, characterized by that:

— said first signal generating means (GS) generate a first signal indicative of a maximum load allowed to each user and expressed as a percentage of a reference load for each user, such as the maximum contractual load of each user, and
— said receiving means (R, R1) comprises:
  — a second signal generator (31) for generating a second signal representative of the user's actual load,
  — a comparing means (25) for comparing said first signal and said second signal and providing an output signal at a first level when said second signal is higher than said first signal, and at a second level when said second signal is lower than said first signal,
  — the first switching means (40) responsive to the first level of said output signal for disconnecting a portion of the users load, selected by the user,
  — a delay means (35) for delaying said output signal, and
  — a second switching means (28) responsive to the first level of said output signal as delayed by said delay means, for disconnecting a further portion of the user's load.

2. A system as claimed in claim 1, comprising a plurality of further time delayed switching means located at user station and each of which is selectively responsive to said first level of said output signal to turn off correspondingly connected loads with a different delay.

3. A system as claimed in claim 1, in which said first signal generating means (GS), at the dispatching office, comprises a pilot generator means (3), operated manually or automatically for providing a variable signal representative of any desired given reduction of the load on the power network.

4. A system as claimed in claim 1 in which said first and second switching means (40, 28) include a time delaying means (36, 35) properly delayed in sequence and requiring the presence of said first level of said output signal for preset times before turning off the connected loads, to avoid transient overloads by user's equipments.

5. A system as claimed in claim 1, further comprising a rate reduction means (37, 38) within each user station, for reducing the rate at which utilized power is billed, and apt to be energized at the time said output signal assumes the first level value, and deenergized when the first signal, coming from the dispatching office, turns off.

6. A system as claimed in claim 5, characterized in that said rate reduction means within each user station, comprises a calibrated impedance and a relay (38) which inserts that calibrated impedance in series with voltage coil of the meter (27), when the rate reduction means is energized.

7. A system as claimed in claim 1 in which said first signal is sent by the dispatching office as a frequency modulation signal on a telephone channel of a telephone-type network (8a), characterized in that said telephone frequency modulation signal is sent to the high voltage user and medium voltage user stations, where it is demodulated and compared with said second locally generated signal, said telephone frequency modulation signal being further sent to the signal relaying means (RT) at each substation and step-down transformer unit for the low voltage network (BT) and from said relaying means (RT) it reaches the low voltage user stations by means of a power line carrier system on the low voltage network.

8. A system as claimed in claim 7 characterized in that, in said relaying means (RT), a modulator operates on the carrier frequency an amplitude modulation by interruption of the carrier with a square wave having a frequency in a ultra low frequency band and said receiving means comprises a synchronous receiver (23), based on a tone decoder phase locked loop integrated circuit, used as a demodulator, the arrangement being such that the characteristics of high out of band signal and noise rejection of said integrated circuit are fully utilized.

**Patentansprüche**

1. Direkter Vorgang zur Fernkontrolle der Leistung, die von einem elektrischen Netz aufgenommen werden kann, geeignet zur Begrenzung der für jede Verbraucher-Fernstation (U) verfügbaren Leistungsmenge, wobei dieser Vorgang ein solcher ist, der eine Steuerzentrale mit einem Generator eines ersten Signals (GS) vorsieht, welches zur Erzeugung eines Signals in das elektrische Netz, wenn erforderlich, durch einen Signalwiederholer (RT) eingegeben und von jeder Verbraucher-Station (U) empfangen wird und welches die Verringerung der Belastungen ermittelt und weiterhin Empfänger (R, R1) bei den Verbraucher-Fernstationen (U) vorsieht, die zur Ausschaltung eines Teiles der Verbraucherbelastung durch einen ersten Schalter auf das genannte erste Signal ansprechen, dadurch gekennzeichnet, dass

— der genannte Generator des ersten Signals (GS) ein erstes Signal ausgibt, welches die für jede Verbraucher-Fernstation (U) höchstzugelassene Belastung ausgedrückt in Prozentwert der Bezugsbelastung eines jeden Verbrauchers, wie z.B. die höchste Vertragsbelastung, angibt;

— und dadurch gekennzeichnet, dass die genannten Empfänger (R, R1) folgende Teile enthalten:

— einen Generator eines zweiten Signals (31) zur Ausgabe eines zweiten Signals, welches die vom Verbraucher tatsächlich aufgenommene augenblickliche Belastung darstellt;

— einen Vergleicher (25), welcher das erste Signal mit dem zweiten Signal vergleicht und ein Ausgabesignal auf einem ersten Pegel liefert wenn das zweite Signal höher als das erste liegt und ein Ausgabesignal auf einem zweiten Pegel, wenn das zweite Signal tiefer als das erste Signal liegt;

— den ersten Schalter (40), der auf den ersten Pegel des genannten Ausgabsignals anspricht, zur Ausschaltung eines ersten Belastungsanteiles, der vom Verbraucher selbst gewählt wurde;

— ein Verzögerungsmittel (35) zur Verzögerung des genannten Ausgabesignals, und

— einen zweiten Schalter (28), der auf den ersten Pegel des genannten Ausgabsignals anspricht, welches durch das genannte Verzögerungsmittel zur Ausschaltung eines weiteren Belastungsanteiles des Verbrauchers verzögert wird.

2. Vorgang nach Anspruch 1, welcher eine Vielzahl weiterer beim Verbraucher angeordneter verzögerten Schalter vorsieht, wobei jeder Schalter zur unterschiedlich verzögerten Ausschaltung der mit ihm verbundenen Belastung auf den ersten Pegel des Ausgabesignals wahlweise anspricht.

3. Vorgang nach Anspruch 1, bei dem der in der Steuerzentrale angeordnete Generator des ersten Signals (GS) einen Hauptgenerator (3) enthält, welcher zur Lieferung eines wechselnden Signales, das eine beliebige Belastungsverringerung im elektrischen Netz darstellt, manuell oder automatisch betrieben wird.

4. Vorgang nach Anspruch 1, bei dem der erste und der zweite Schalter (40, 28) mit zweckmässig golgeverzögerten Verzögern (36, 35) ausgestattet sind, welche zur Ausschaltung der mit ihnen verbundenen Belastungen der Anwesenheit des ersten Pegels des genannten Ausgabesignals auf eine vorbestimmte Zeit bedürfen, und zwar zur Vermeidung der Wirkungen der vorübergehenden Überbelastungen in den Verbraucher-Einrichtungen.

5. Vorgang nach Anspruch 1, welcher weiterhin eine bei jedem Verbraucher angeordnete Vorrichtung (37, 38) zur Herabsetzung des Tarifs vorsieht, welche den Tarif, zu dem die verbrauchte Leistung berechnet wird, reduziert und ausserdem dazu geeignet ist, eingeschaltet zu werden, sobald das genannte Ausgabesignal den Wert des ersten Pegels erreicht und ausgeschaltet zu werden, sobald das erste von der Steuerzentrale ausgegebene Signal ausfällt.

6. Vorgang nach Anspruch 5, dadurch gekennzeichnet, dass die genannte, bei jedem Verbraucher angeordnete Vorrichtung zur Herabsetzung des Tarifs einer geeichten Impedanz und aus einem Relais (38) besteht, welches die genannte, geeichte Impedanz mit der Spannungsspule des Zählers (27) in Reihe einschaltet, sobald die genannte Vorrichtung zur Herabsetzung des Tarifs aktiviert ist.

7. Vorgang nach Anspruch 1, bei dem das genannte erste Signal von der Steuerzentrale in Form einer Frequenz-Modulation über einen Sprechkanal eines telephonartigen Netzes (8a) ausgegeben wird, dadurch gekennzeichnet, dass das genannte Frequenzmodulationssignal an die Hoch- und Mittelspannungsverbraucher befördert wird, bei denen es demoduliert und mit dem bereits genannten, örtlicht erzeugten, zweiten Signals vergliechen wird und, dass das genannte frequenzmodulierte Sprechsignal ebenfalls an die je in eine Unterstation und Trafostation des Niederspannungsnetzes (BT) angeordnete Signalwiederholer befördert wird, wo das von den Wiederholern (RT) ausgegebene Signal durch auf die Niederspannungsleitung beförderte Wellen die Niederspannungsverbraucher erreicht.

8. Vorgang nach Anspruch 7, dadurch gekennzeichnet, dass in den genannten Signalwiederholern (RT) ein Modulator auf die Trägerfrequenz eine Amplitudenmodulation mit Unterbrechung derselben Trägerfrequenz durch eine viereckige Trägerwelle bewirkt, deren Frequenz im ultratiefen Band liegt und, dass der genannte Empfänger einen Synchronempfänger (23) enthält, der als phaseneinrückender Tondekoder in Form einer integrierten Schaltung verwirklicht und als Demodulator verwendet ist, wobei diese Lösung eine maximale Verwertung der Abweisungseigenschaften der ausser Band liegenden Signalen und Geräusche gestattet, welche eine typische Eigenschaft der genannten integrierten Schaltung darstellt.

**Revendications**

1. Un système direct de télécontrôle de la puissance absorbable par un réseau électrique, pour limiter le quantité de puissance mise à disposition de chaque station usagère éloignée (U), le système étant tel qu'il inclut un centre opératif muni d'un générateur d'un premier signal (GS) pour engendrer un signal à immettre, quand il est nécéssaire, par moyen d'un répétiteur de signal (RT), dans le réseau électrique pour que soit reçu par chaque usager éloigné (U) un premier signal qui détermine la réduction des chargements, et des récepteurs (R, R1) installés auprès des usages (U) sensibles à ce premier signal pour disjoindre par moyen d'un premier interrupteur au moins une partie du chargement de l'usager, caractérisé par le fait que:

— le générateur du premier signal (GS) engendre un premier signal qui indique le chargement maximum accordé à chaque usager, exprimé comme pourcentage d'un chargement de référence de chaque usager tel que le chargement contractuel maximum de chaque usager et,

— les dits récépteurs (R, R1) comprennent:
  — un générateur d'un second signal (31) pour engendrer un second signal qui représente le chargement instantané réelment absorbé par l'usager,
  — un comparator (25) pour confronter le premier signal avec le second et pour fournir un signal de sortie à un premier niveau quand le second signal est plus élevé que le premier et un signal de sortie à un second niveau quand le second signal est moins élevé que le premier,
  — le premier interrupteur (40) étant sensible au premier niveau du dit signal de sortie pour disjoindre une première partie du chargement de l'usager, selectionnée par l'usager lui-même,
  — un moyen de retard (35) pour retarder ce signal de sortie,
  — un second interrupteur (28) sensible au premier niveau du dit signal de sortie retardé par le dit moyen de retard, pour disjoindre une ultérieure partie du chargement de l'usager.

2. Un système tel qu'il est revendiqué dans la revendication 1, qui comprend une multiplicité d'ultérieurs interrupteurs retardés, installés auprès de l'usager, chacun d'eux étant sélectivement sensible au premier niveau du signal de sortie pour disjoindre, avec un retard différent, le chargement qui lui est accouplé.

3. Un système tel qu'il est revendiqué dans la revendication 1, dans lequel le générateur du premier signal (GS) installé dans le centre opératif comprend un générateur pilote (3) qui vient manoeuvré soit manuellement soit automatiquement pour fournir un signal variable qui représente quelque réduction du chargement sur le réseau l'on choisisse.

4. Un système tel qu'il est revendiqué dans la revendication 1, dans lequel le premier et le second interrupteur (40, 28) comprennent des appareils retardateurs (36, 35) qui sont opportunément retardés en séquence et qui nécéssitent la présence au premier niveau du dit signal de sortie pendant un temps prédeterminé avant de disjoindre les chargements qui leur sont accouplés, le but étant d'éviter les surcharges transitoires des appareils de l'usager.

5. Un système tel qu'il est revendiqué dans la revendication 1, qui inclut en plus un moyen de réduction des tarifs (37, 38) installé auprès de chaque usager, pour réduire le tarif auquel la puissance utilisée vient facturée, et apte à être inséré quand le dit signal de sortie rejoint la valeur du premier niveau, et apte à être débranché quand le premier signal provenant du centre opératif n'y est plus.

6. Un système tel qu'il est revendiqué dans la revendication 5, caractérisé par le fait que dit moyen de réduction des tarifs installé auprés de chaque usager comprend une impédance taréee et un relais (38) qui branche la dite impédance tarée en série avec la bobine voltmétrique du compteur (27), quand le moyen de réduction des tarifs est branché.

7. Un système tel qu'il est revendiqué dans la revendication 1, dans lequel le dit premier signal vient envoyé du centre opératif en modulation de fréquence sur une chaîne téléphonique d'un réseau de type téléphonique (8a) caractérisé par le fait que dit signal en modulation de fréquence vient envoyé aux usagers de haute et de moyenne tension, où il vient démodulé et comparé avec le dit deuxième signal engendré localement, et que dit signal téléphonique en modulation de fréquence vient aussi envoyé aux répétiteurs (RT) placés auprès de chaque sousstation et de chaque cabine de transformation pour le réseau de basse tension (BT) d'où des dits répétiteurs (RT) il rejoint les usages de basse tension par moyen d'un système à ondes convoyées sur la ligne de puissance de basse tension.

8. Un système tel qu'il est revendiqué dans la revendication 7, caractérisé par le fait que, dans les dits répétiteurs (RT), un modulateur opère sur la fréquence portante une modulation d'amplitude par interruption de la portante avec une onde carrée, de fréquence dans la bande ultra-basse, et le dit récépteur comprend un récepteur synchrône (23) basé sur un circuit intégré décodificateur de ton à accrochage de phase, utilisé comme démodulateur, cette solution étant telle qu'elle utilise au maximum les caractéristiques de tels circuits intégrés de rejeter les signaux hors bande et les bruits.

0 020 310

Fig.1  Fig.2  Fig.3  Fig.4